# EUROPEAN PATENT SPECIFICATION

(11) **EP 2 390 628 B1**
(45) Date of publication and mention of the grant of the patent: **20.06.2012**
(21) Application number: 10163910.2
(22) Date of filing: 26.05.2010
(51) Int. Cl.: G01C 21/36, G09B 29/00

(54) **Navigation system for a vehicle and method of providing point of interest information**
Navigationssystem für ein Fahrzeug und Verfahren zur Bereitstellung von Informationen an Punkten von Interesse
Système de navigation pour un véhicule et procédé de fourniture d'informations de points d'intérêt

(43) Date of publication of application: 30.11.2011
(73) Proprietor: Alpine Electronics, Inc., Tokyo (JP)
(72) Inventor: Galos, Andreas, 70567 Stuttgart (DE)
(74) Representative: Klunker . Schmitt-Nilson . Hirsch

(56) References cited:
- EP-A2- 1 691 211
- DE-A1-102008 040 030
- US-A1- 2010 094 544

## Description

### Background of the Invention

### Field of the Invention

The present invention is concerned with a navigation system which is adapted to be installed in a vehicle and to provide point of interest (POI) information to a user. Further, the invention is concerned with a method of providing point of interest information to a user in a navigation system.

### Description of the Related Art

A commonly known navigation system detects the position of a user for performing route guidance to a destination which the user has entered into the navigation system. For example, a navigation system detects the position of a vehicle when the navigation system is installed in a vehicle, wherein the current position of the vehicle is typically detected by using a navigation sensor, a receiver such as a GPS (Global Positioning System) receiver, and map data corresponding to an area surrounding the detected position. Generally, a navigation system may display a map image on a display screen and may display a mark indicating the current position of the vehicle. The navigation system can search for a route by means of a route processing unit which calculates a route from a start point to a destination. As the current position of the vehicle changes with the movement of the vehicle, the vehicle position mark is moved along the route on the display screen, or a map image adjacent to the vehicle is scrolled while the vehicle position mark persists at a predetermined point on the display screen.

In addition to the user entering a destination, commonly known navigation systems also make suggestions concerning possible destinations to the user. These suggestions can include previously set destinations or so-called points of interest (POI). Point of interest is a general term referring to locations or spots that are considered potentially interesting to a wide range of users. Points of interest can be gas stations, garages for vehicle repair, restaurants, hotels, sights, tourist information centers, supermarkets, shopping malls, other kinds of stores, etcetera. The user of the navigation system can access POI information trough the menu of the navigation system, commonly selectable by category. The navigation system then presents a list of points of interest in the selected category, potentially sorted by distance from the current location. For example, the user may be looking for a restaurant to take a break from driving. Upon an according request by the user, the navigation system will provide the user with the names of various restaurants, with the closest being shown first in the list, and so on. The navigation system may be designed in such a way that the user can set his POI choice as the destination, such that the navigation system calculates the route and leads the user to the desired POI.

In recent times, particularly urban regions have taken measures to reduce air pollution within cities. One approach has been to establish so-called "Low Emission Zones (LEZ)" for reducing air pollution in urban areas due to urban traffic, which typically are restricted road areas or zones in which only vehicles may enter which fulfil a certain emission standard. In establishing LEZs, there may also be several levels of emission standards, wherein the vehicles have to fulfil at least the lowest standard which is allowed for vehicles to enter the LEZ. In such situations, there may be the case that the driver of a vehicle either does not know where any LEZs are existing when driving and/or does not know whether he is allowed to enter a respective LEZ.

US 2010/094544 A1 discloses a graphic labelling of traffic restrictions for vehicles in a navigation device using edge curves or areas.

### Summary of the invention

It would therefore be beneficial to provide a navigation system and a method of providing POI information in a navigation system which may assist the driver in finding an appropriate POI taking into account any restricted road areas such as low emission zones.

According to the invention, there is provided a navigation system according to claim 1. Further, according to the invention, there is provided a method of providing POI information in a navigation system according to claim 15.

Particularly, there is provided a navigation system adapted to be installed in a vehicle and to provide point of interest (POI) information to a user, the navigation system comprising a processing unit for receiving and processing POI information and access permission information, the access permission information being indicative of a required permission for a vehicle regarding the use of at least one specific road area depending on its emission characteristic, and a display screen coupled to the processing unit, wherein the processing unit is adapted to generate a control signal resulting in a displaying of the POI information depending on the access permission information on the display screen.

Moreover, there is provided a method of providing point of interest (POI) information to a user in a navigation system which is adapted to be installed in a vehicle, the method comprising the steps of receiving and processing POI information and access permission information, the access permission information being indicative of a required permission for a vehicle regarding the use of at least one specific road area depending on its emission characteristic, and generating a control signal and coupling the control signal to a display screen of the navigation system, resulting in a displaying of the POI information depending on the access permission information.

According to the invention, there is provided a navigation system and a method of providing POI information in a navigation system which assist the driver in finding an appropriate POI taking into account any restricted road areas such as low emission zones (LEZ). By establishing a relation between POI information and access permission information and causing a displaying of the POI information depending on the access permission information, the user of the navigation system is informed about the accessibility of POIs in terms of their location with regard to low emission zones before selecting one of them. Accordingly, the user is provided with information that saves him considerable amounts of time and resources, such as fuel, because the accessibility of POIs can already be taken into account when setting a POI as a destination. Moreover, by causing the displaying of POIs to be dependent on the access permission information, the user can easily grasp which POIs he is allowed to drive to, based on the emission characteristics of his vehicle. There is no need to inspect the location of a POI, consider if this location may be within a restricted road area (an area requiring the vehicle to fulfil particular emission characteristics requirements), what kind of restricted road area that may be and if the vehicle the user is driving may enter that road area. This multi-step consideration process the user has to perform for any of the POIs presented by a commonly known navigation system may be eliminated through the displaying of POIs depending on the access permission information. Accordingly, the user may need less time to select a POI and be less distracted by the process of selecting a POI. Besides the increased convenience of use and the time savings achieved, the decreased distraction also increases driving safety, in case the navigation system is operated while driving the vehicle.

For example, the navigation system may display each POI with an indicator or tag or other graphical element that shows if the respective POI is within a restricted road area, such that the user may make an informed selection. For example, in case that a specific badge or sticker (such as green, yellow or red badges used in Germany for indication of a respective emission characteristic of the vehicle) is required to enter a specific road area (which may be of the type of a LEZ or something similar) containing the location of a POI, a graphical element associated with that POI may indicate to the user the badge or sticker required. In a further example, the navigation system has a setting in the storing unit (optionally preset upon manufacturing the vehicle such as factory preset) for the vehicle having a LEZ badge (for example indicated by the type red/yellow/green used in Germany, but also applicable to other standards) or not. Based on this information, the displaying may only contain POIs, which lie outside a restricted road area or which lie within a restricted road area that the vehicle can access with its LEZ badge. In this way, the POI information is filtered, with only accessible POIs being displayed to the user. It is also possible that the POI information is displayed, with the POIs lying within a restricted road area not accessible with the vehicle's badge being displayed in a different way than POIs accessible with the vehicle's badge. The different ways of displaying may allow the user to grasp at a quick glance, which POIs are accessible. The navigation system may be set-up to no let the user set non-accessible POIs (based on the LEZ badge) as destinations. In the examples described, the display of the POI information depends on the access permission information, such that the user can more quickly and effectively select an appropriate POI as a driving destination, based on restricted road areas, such as low emission zones.

According to an embodiment of the invention, the POI information comprises a plurality of points of interest, with each point of interest being displayed on the display screen in one of a plurality of visualization modes depending on the access permission information. This allows the user to see from the visualization mode if any and which of the POI lie within the at least one specific road area. The user may then select a POI based on his knowledge about his vehicle being allowed to enter the at least one specific road area depending on the vehicle's emission characteristic.

According to an embodiment of the invention, the plurality of visualization modes correspond to a plurality of permission classes for vehicles depending on their emission characteristics. It is possible that there are only two permission classes. For example, the regulation concerning a plurality of low emission zones present in a certain region may be of such a form that each vehicle is either allowed to enter all low emission zones or no low emission zones. Accordingly, only two permission classes are present, one being exemplarily denoted as "LEZ badge required" and the other one being exemplarily denoted as "LET badge not required". Accordingly, a first visualization mode may be applied to a POI lying within a non-restricted road area, whereas a second visualization mode may be applied to a POI lying within a restricted road area. It is also possible that there are more than two permission classes. This allows for the vehicles to be categorized more gradually than the binary decision of "LEZ badge required" and "LEZ badge not required". Accordingly, the more than two visualization modes may correspond to a permission class for unrestricted road areas and a plurality of permission classes for restricted road areas. In this way, the at least one specific road area requiring a specific permission may consist of a plurality of specific road areas, which all require some sort of permission, but may require different kinds of permission. In this way, the permission classes may be used to categorize vehicles in such a way that they are allowed to enter some of the restricted road areas, while not being allowed to enter other restricted road areas, depending on their emission characteristics. With the plurality of visualization modes corresponding to the pluality of permission classes, the different grades of permissions required may be made easily perceivable to the user through their respective graphical representation on the display screen. Accordingly, the plurality of permission classes may refer to merely two permission classes, making a distinction between unrestricted and restricted road areas, as well as to more than two permission classes. It is also possible that all the permission classes refer to restricted road areas. The individual visualization modes may differ from each other by different colors, shapes, symbols, etc. used for displaying the POIs.

According to an embodiment of the invention, each of the plurality of visualization modes comprises a representation of at least one emission badge or emission class of a vehicle sufficient to enter a road area having the respective one of the plurality of permission classes, if any emission badge or emission class is required for the respective one of the plurality of permission classes. Based on its emission characteristic, each vehicle may be categorized into one of a plurality of emission classes. Again, there may be only two emission classes, exemplarily denoted "high emission" and "low emission", or there may be a more gradual structure of emission classes. The categorization of a vehicle into an emission class may be done based on a test, such as an emission test, or on innate properties of the vehicle, such as make, model and year, or a combination thereof or any other suitable means. It may be the driver's responsibility to have according documentation of the categorization. Such documentation may be in the form of a permit document. It could also be in the form of a sticker or badge to be applied to the wind shield or any other suitable part of the vehicle or in any other form suitable for documentation purposes. For each permission class one or more emission classes are sufficient to enter the road areas having the respective permission class. Accordingly, one or more badges may be sufficient to enter the road areas having the respective permission class. A particular visualization mode corresponding to a particular permission class may show the "worst" badge sufficient to enter a road area surrounding a POI being displayed in the particular visualization mode. Accordingly, the user may deduce easily from the badge shown in connection with the POI, if his vehicle's badge is sufficient to reach the POI. This is an intuitive way of displaying POI information depending on access permission information to the user, because the plurality of badges are commonly structured in an intuitive way. For example in Germany, the green badge is indicative of better emission characteristics of the vehicle than the yellow badge, which in turn is indicative of better emission characteristics than the red badge. Accordingly, by showing an indication of a red badge, it becomes clear to the user that the POI may also be reached with a yellow or green badge.

For example, the emission badge may be one which indicates one of several emission levels, such as a green badge indicating level 4 (corresponding to emission class Euro 4 or higher), a yellow badge indicating level 3 (corresponding to emission class Euro 3), and a red badge indicating level 2 (corresponding to emission class Euro 2) used in Germany. In other words, the different colours of emission badges are indicative of different levels of emission characteristics of vehicles, wherein in the present example a higher level is indicative of a better vehicle emission characteristic.

It shall be noted that the badges and colours thereof, and emission classes are mere examples of potential vehicle emission information and shall not be understood to restrict the invention in any way.

According to an embodiment of the invention, each of the plurality of visualization modes comprises a representation of all emission badges or emission classes of a vehicle sufficient to enter a road area having the respective one of the plurality of permission classes. The visualization modes may be even more intuitive to the user in this embodiment, as no relating of badges needs to be carried out by the user. Each POI is shown with an indication of all badges sufficient to reach the respective POI. For example, should a POI lie in a road area in Germany requiring a red badge for entry, the POI is shown on the display with a representation of a red badge, a yellow badge and a green badge. Accordingly, the user will recognize his badge - in case he has any of the three - and easily perceive the POI as an accessible destination.

According to a further embodiment of the invention, the navigation system comprises a storing unit, coupled to the processing unit, for storing vehicle emission information which is indicative of an emission characteristic of the vehicle, wherein the processing unit is adapted to generate the control signal such that it results in a displaying of the POI information depending on the access permission information and the vehicle emission information on the display screen. This embodiment allows for the user to be freed from the task of relating the displayed POI information to the emission characteristic, for example the emission class, of his vehicle. No determination need to be made by the user if the emission class of the vehicle is sufficient to drive to a particular POI. The display screen gives the user information that reflects a relation of the vehicle emission information and the access permission information.

For example, the navigation system may have a setting in the storing unit (optionally preset upon manufacturing the vehicle such as factory preset) for the vehicle having a LEZ badge (for example indicated by the type red/yellow/green used in Germany, but also applicable to other standards) or not. The vehicle emission information may also be set by the user in a set-up procedure of the navigation system. It is also possible that the user enters vehicle-specific information, such as vehicle make, model, year, etc., into the navigation system and that the navigation system determines the vehicle emission information. This determination may be made by using a database, either provided in the navigation system or remotely on a server accessible by the navigation system. In these ways, the embodiment is also useful in navigation systems (so-called after-market systems), which are installed in older vehicles without having a factory preset. Such vehicles have potentially higher emission rates, so that they are more likely to be not permitted in a LEZ as they not fulfil the required emission standard. Also, portable navigation systems may have a storing unit, wherein the vehicle emission information may be reset upon moving the navigation system from one vehicle to another.

According to a further embodiment of the invention, the POI information comprises a plurality of points of interest and the processing unit is adapted to determine for each of the points of interest if it is an allowable destination based on the access permission information and the vehicle emission information. By relating the access permission information to the vehicle emission information, the navigation system may determine for a given POI if the vehicle emission characteristic complies with the emission characteristic required for a vehicle to drive in a road area of the POI. More particularly, the emission class of the vehicle may be compared to the permission class of a road area of a POI. In other words, if the POI lies within a road area requiring a certain permission class, it is determined if the emission class of the vehicle is sufficient to enter the road area. In this way, the processing unit determines if a POI is an allowable destination in terms of the vehicle's emission characteristic.

According to a further embodiment of the invention, the processing unit is adapted to generate the control signal in such a way that only points of interest being determined to be allowable destinations are displayed on the display screen. In this way, the user is only provided with POIs being allowable destinations such that there is no need for the user to think about the emission class of his vehicle. Filtered POI information is displayed. The user does not know about the filtering operation or about POIs that are not accessible. However, he can freely select from the presented POIs. In this case, the allowable POIs may not be displayed in a plurality of visualization modes, which indicate the emission class required to reach a respective POI, to keep the information level to the user low and minimize the distraction imposed by the POI selection process.

According to a further embodiment of the invention, the processing unit is adapted to generate the control signal in such a way that a first set of points of interest, each of which being determined to be an allowable destination, is displayed with a first visualization characteristic and a second set of points of interest, each of which being determined to be a non-allowable destination, is displayed with a second visualization characteristic. The user may be provided with a displaying of the points of interest in a way that the distinction between allowable POIs and non-allowable POIs is readily visible. A visualization characteristic may be a basic property of the graphical representation of a POI such that it catches the user's eye immediately. Hence, the user's attention is intuitively drawn to the set of allowable POIs, while the non-allowable POIs are displayed to the user, nonetheless. This may be appreciated by a user who has an emergency and wants to ignore the LEZ regulations or who has a special temporary permit, etc.

According to a further embodiment of the invention, each point of interest is displayed on the display screen in one of a plurality of visualization modes depending on the first and second visualization characteristics and the access permission information. This allows for providing the user with a maximum of information regarding low emission zones in context with POIs. The user if provided with an easily visible indication if a POI is an allowable destination or not, based on the vehicle emission characteristics. In addition, it is displayed in a general manner which POI lie within what kind of low emission zones. Accordingly, the user has the choice to either pay attention only to the basic information of a POI being an allowable destination or not or to refer to more detailed information about specific permission classes associated with specific POIs. The latter may be a convenient option for the user if the vehicle emission characteristics have changed or the emission class has been changed due to changed laws, but the vehicle emission information in the storing unit has not been updated yet.

According to a further embodiment of the invention, the navigation system may comprise a human-machine interface for selecting destinations for a navigation process, wherein the human-machine interface is adapted to disregard a selection attempt received from the user regarding a point of interest being determined to be a non-allowable destination. This can be implemented for example by a non-allowable POI not being highlighted in any way during a hover-over with a cursor on the display screen, which can be manipulated by the user. Another example is that a selection command, such as the pressing of a button, is disregarded when a non-allowable POI is targeted by a cursor. A further example is that a non-allowable POI displayed on a touch screen may not be selected through touching the screen at the respective screen location. Alternatively/Additionally, the navigation system may issue a warning to the user when attempting to select a non-allowable POI, with the warning being "LEZ badge required" or the like.

According to a further embodiment of the invention, the processing unit is adapted to generate the control signal in such a way that the POI information is displayed on the display screen in a list view. Alternatively/additionally, the POI information may be displayed on the display screen in a map view. Accordingly, the POIs may be shown in a list, on a map, or in a list and on a map at the same time, for example one beside the other.

According to a further embodiment, the POI information, which comprises a plurality of points of interest, and the access information received by the processing unit are comprised of separate data sets, with the processing unit being adapted to determine for each of the plurality of points of interest if it is located within the at least one specific road area. In other words, the processing unit is adapted to determine if an address, e.g. a POI address, lies within a road area defined via a suitable set of roads or coordinates or other data. In this way, POI information can be stored and made available to the processing unit independent of access permission information, with the relation of the two being carried out in the processing unit. Alternatively, the processing unit may receive the POI information and the access permission information as integrated data sets. For each POI, the required permission for a vehicle for the location of the respective POI can be stored together with the other data specific to the respective POI, such as the POI location.

The POI information and the access permission information may be stored in a source data storage unit provided in the navigation system. Alternatively/additionally, the navigation system may have a receiving unit for receiving the POI information and the access permission information from an outside source, such as a central server. The received information may also be used to update the information stored in the source data storage unit provided in the navigation system. It is also possible that one of the POI information and the access permission information is stored in the source data storage unit, with the other being received from an outside source. Storing the information in the source data storage unit may provide for shorter access times and a better responsiveness of the navigation system to user commands. Receiving the information from an outside source may allow for more up-to-date information, as a central server is usually updated more frequently. Especially in the field of POIs and low emission zones, frequent changes occur, such that receiving more recent POI information and access permission information may lead to substantially better provision of accordingly processed POI information to the user.

Further advantageous features and embodiments of the invention are evident from the dependent claims.

### Brief Description of the Drawings

The invention will now be explained in view of the accompanying drawings for illustrating various embodiments of the invention, in which
- Fig. 1: is a schematic diagram of an exemplary vehicle navigation system according to an embodiment of the present invention,
- Fig. 2: depicts various kinds of exemplary information shown on a respective traffic sign indicating respective restricted road areas,
- Fig. 3: shows various possible display screen outputs in accordance with a first embodiment of the invention,
- Fig. 4: shows an exemplary implementation of a system setup for storing ve- hicle emission information in a navigation system,
- Fig. 5: shows various possible display screen outputs in accordance with a second embodiment of the invention, and
- Fig. 6: shows various possible display screen outputs in accordance with a third embodiment of the invention.

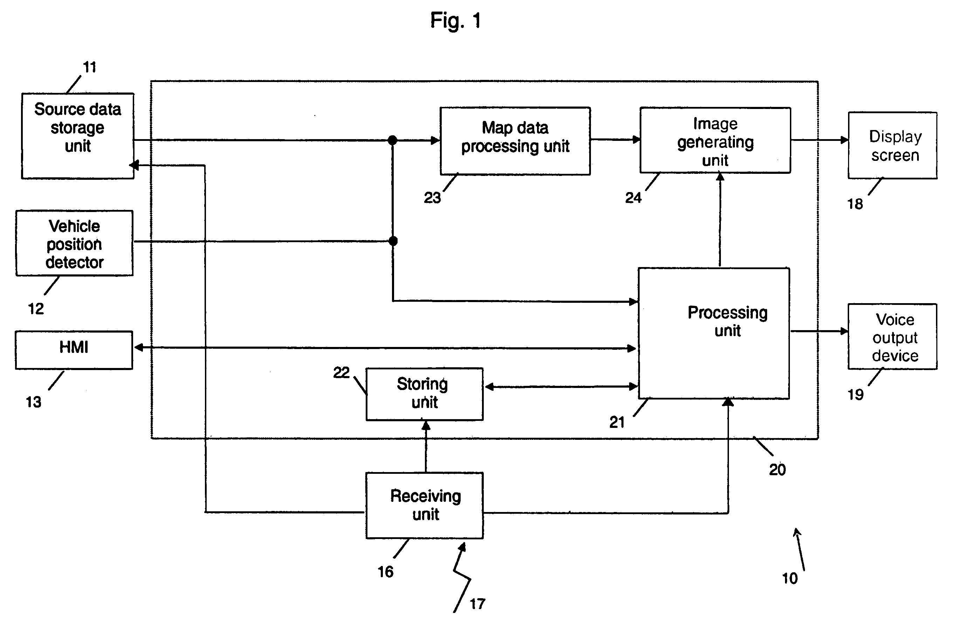

In Fig. 1, there is illustrated a general schematic diagram of an exemplary navigation system 10 according to an embodiment of the present invention. The navigation system may be installed in a vehicle when the vehicle is manufactured, i.e. is a pre-installed navigation system. According to another embodiment, the navigation system may also be a so-called after-market product which is installed in the vehicle at a later time after the vehicle has been manufactured.

The navigation system 10 includes a source data storage unit 11 such as a DVD device or hard disk drive for storing map information or map data for route processing and for displaying map data on a display screen. The source data storage unit 11 also comprises point of interest (POI) information, access permission information about specific road areas having particular vehicle restrictions depending on vehicle emission characteristics, such as low emission zone information, and possibly other data. Reference numeral 20 denotes a navigation control device which comprises sub-units, as explained in more detail below, which generate a map image around the vehicle position using the map data, perform route searching for finding a path for a route to be searched to a destination, and provide POI information. From the source data storage unit 11 available map information or map data is loaded into a map data processing unit 23 which may include internal memory for storing corresponding map data. The map data processing unit 23 is connected with an image generating unit 24 for generating a map image on a display device 18, such as a display screen. The image generating unit 24 reads a set of relevant map data from the map data processing unit 23 and produces corresponding signals to be provided to the display screen 18. The image generating unit 24 may include a suitable circuitry for composing a map image including, for example, a vehicle position mark indicating the current vehicle position superimposed on the map image. To this end, a vehicle position detector 12 is also connected with the map data processing unit 23 which provides corresponding signals to the image generating unit 24. The image generating unit 24 also serves for superimposing a path of a searched route, or multiple paths of multiple searched routes, onto the map image, for example in a manner that the route path is highlighted in order for the user to easily distinguish the route from the remainder of the displayed map data. Similarly, the image generating unit 24 also serves for superimposing one or several POI locations onto the map image, for example in a manner that POI symbols are mainly of one color in order for the user to easily distinguish the POIs from the remainder of the displayed map data. Also, the image generating unit 24 serves to switch between the map view discussed above and a list view for showing information to the user in the form of a list, for example a POI list or a menu option list.

The navigation control device 20 further includes a processing unit 21, which is coupled with the image generating unit 24, for searching a route leading to a destination, for generating a guide route image on the basis of route data calculated in the route search process, for processing POI information and for generating a POI image. These functions may be carried out concurrently or at separate times. I.e. there may also be a map overlaid with a route generated on the display screen, there may also be a map overlaid with POI information generated on the display screen, there may be a map overlaid with a route and with POI information generated on the display screen, or there may be a list of POI information generated on the display screen. Additionally or alternatively, the processing unit 21 may also be connected with a voice output device 19 for providing voice guidance according to corresponding route data or for providing spoken POI information. The map data processing unit 23 and the processing unit 21 are both connected with the vehicle position detector 12, so that the map image displayed on the display screen 18, the route guidance by means of the display screen 18, and the POI information displayed on the display screen 18 may be generated in accordance with the vehicle's motion and position.

The navigation system 10 according to the embodiment as shown in Fig. 1 also includes a storing unit 22 for storing vehicle emission information which is indicative of an emission characteristic of the vehicle. Vehicle emission information in the context of the present invention shall be understood as comprising any type of information which directly or indirectly indicates an emission characteristic of the vehicle. As an emission characteristic of the vehicle, any technical information shall be understood which directly or indirectly indicates the exhaust emission behaviour or exhaust emission characteristic of the vehicle. For example, such information may indicate whether the vehicle fulfils a certain emission standard, such as the commonly known Euro 4 or Euro 5 emission standard available in Europe for gasoline and Diesel engines. As such, potential vehicle emission information may be any type of information, such as information regarding a printed and/or coloured badge or sticker or something similar, which indicates whether the vehicle fulfils the Euro 4 emission standard (indicated, e.g., by a green badge printed with a number "4"). In some countries, such as Germany, the driver of a vehicle is requested to attach any such badge in visible manner to the vehicle, so that the emission characteristic of the vehicle may be inspected from the outside of the vehicle.

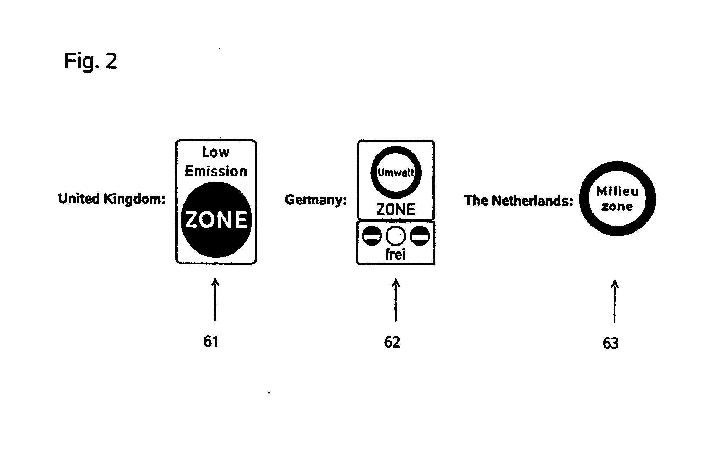

In Fig. 2, various kinds of exemplary information for respective restricted road areas are shown. Typically, such access permission information is placed on a respective traffic sign indicating to the driver that he will be entering a restricted road area. Such restricted road area may be, for example, a so-called "Low Emission Zone (LEZ)", which typically is known as road area or zone in which only vehicles may enter which fulfil a certain emission standard. For example, in a particular LEZ of a city, only vehicles having the Euro 4 standard may enter. Such LEZ may, in principle, be indicated by the information 61 to 63 depicted in Fig. 2 for different countries. Such information, in the first place, indicates that the vehicle will enter a LEZ. In the second place, such information (such as information 62 shown in Fig. 2) may directly or indirectly indicate the vehicle's required emission characteristic to enter the LEZ. For example, information 62 indicates that a vehicle having a red, yellow or green badge, i.e. which fulfils at least the Euro 2 emission standard or higher, may enter the LEZ.

Corresponding information may be stored in the source data storing unit 11 in order to provide the location and area of any LEZ existing in a particular region of interest, and to provide respective access permission information about any LEZ (e.g., information which vehicle emission standard is require for entering the LEZ and other criteria which may be relevant, such as vehicle weight, daytime, season etc.). Such information may be seen as access permission information being indicative of a permission of a vehicle to enter the LEZ.

In establishing LEZs, there may also be several levels of emission standards as indicated with information 62 in Fig. 2, wherein the vehicles have to fulfil at least the lowest standard which is allowed for the vehicle to enter the LEZ. Such information may also be contained in corresponding access permission information assigned to a LEZ and stored in the source data storing unit 11.

The functioning of the provision of POI information to the user by the navigation system 10 will be described with regard to three exemplary embodiments in the following.

According to a first embodiment, no vehicle emission information is available to the processing unit 21. This may have a number of reasons. It is possible that no vehicle emission information is set in the storing unit 22. This scenario may arise when the navigation system 10 is installed and the user does not indicate during the set-up process or at a later point in time which emission characteristic the vehicle has. It is also possible that the navigation control device 20 does not comprise a storing unit 22 and does not store vehicle emission information.

The POI provision process starts with the user entering a POI command at a human machine interface (HMI) 13 indicating that he wishes to see POI information. The HMI 13 may comprise a plurality of buttons, may be a keypad-type structure, may be a touch screen integrated into the display screen 18 or any other suitable means for a user to make system inputs. The POI command may indicate which category of POI the user wants to see, wherein different categories are restaurants, hotels, sights, gas stations, etc. The user input may also be a two-stage process, with the first step being that the user requests to see POIs in general and the second step being that the user chooses one of a plurality of categories presented for selection on the display screen 18. In the exemplary embodiment described, the user requests to obtain POI information in the restaurant category. As a response thereto, the processing unit 21 requests POI information from the source data storage unit 11 in the restaurant category. The request issued by the processing unit 21 takes into account the current position of the vehicle, known from the vehicle position detector 12. In accordance with the request, the processing unit 21 receives a set of restaurant records from the source data storage unit 11. The number of restaurant records contained in the set of restaurant records may be a predetermined number or may be set in accordance with other variables, for example via limiting the distance to the restaurant from the current position. In the embodiments described herein, the set of restaurant record comprises four restaurants. It is, however, apparent to a person skilled in the art that this number is of merely exemplary nature and that the number of records may change depending on various other factors.

Before, at the same time with, or after requesting the POI information, the processing unit 21 requests access permission information from the source data storage unit 11. The scope of access permission information received from the source data storage unit 11 may be limited in some way. For example, the source data storage unit may respond by returning information about all road areas within a predetermined distance from the current position that require some sort of permission depending on the emission characteristics of a vehicle, such as low emission zones. It is also possible that the request for access permission information depends on the POI information received.

From the POI information and the access permission information, the processing unit 21 determines if any and which one(s) of the POIs are located in a restricted road area, i.e. in a road area that requires the entering vehicles to have particular emission characteristics. For each of the POIs located in a restricted road area, it is determined which permission class is required for a vehicle to enter the respective road area. From the permission class, it is determined which emission class / which emission badge a vehicle must have to enter the respective road area. In the exemplary embodiment described there are four permission classes (which relates to the situation in Germany). The first permission class, which corresponds to unrestricted road areas, does not require the vehicle to have any emission badge. The second permission class, which corresponds to restricted road areas that have low requirements (with low requirements meaning that, when compared to medium and high requirements, worse emission characteristics are still acceptable), requires the vehicle to have a at least a red emission badge, i.e. to have a red, yellow or green emission badge. The third permission class, which corresponds to restricted road areas that have medium requirements, requires the vehicle to have at least a yellow badge, i.e. to have a yellow or green badge. The fourth permission class, which corresponds to restricted road areas that have high requirements, requires the vehicle to have a green badge.

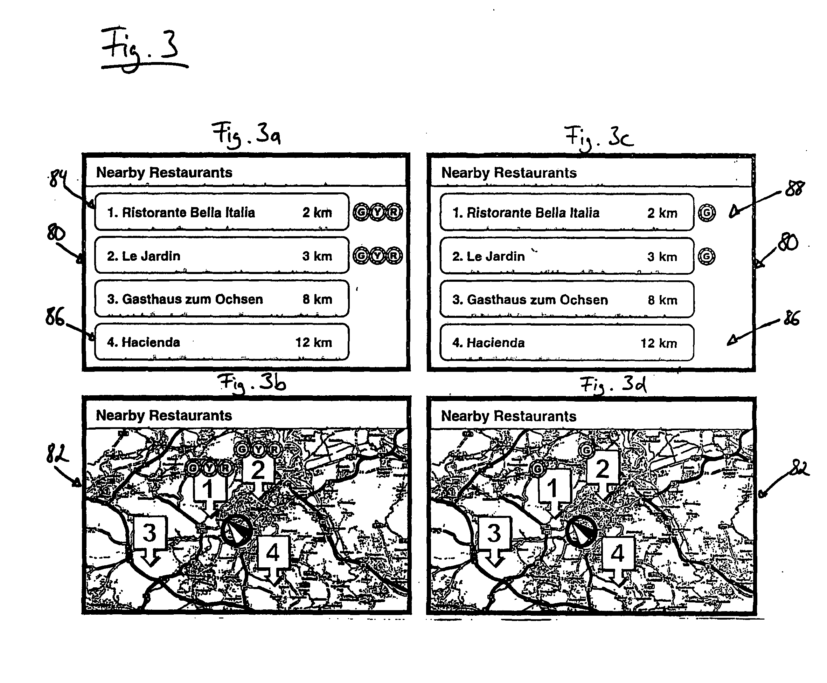

Reference is now made to Fig. 3. It is assumed that the above described procedure has been carried out by the processing unit 21, with four restaurants, enumerated 1, 2, 3 and 4 in the order of shortest to longest distance from the current position, having been provided as POI information by the source data storage unit 11. From the access permission information, also provided by the source data storage unit 11, the processing unit 21 has determined that restaurants 1 and 2 are within a restricted road area, to which the second permission class is assigned, i.e. which requires a vehicle to have at least a red badge to enter this road area. Accordingly, a vehicle having a red, yellow or green badge may enter the restricted road area and drive to the restaurants 1 and 2. Accordingly, the processing unit generates a control signal that indicates that all restaurants 1 through 4 are to be displayed, with restaurants 1 and 2 being provided in a first visualization mode 84 that shows the red, yellow and green badges. The control signal also specifies that the restaurants 3 and 4 are to be displayed in a second visualization mode 86 that shows no badge representations, as no badge is required to drive thereto. The control signal is output to the image generating unit 24, which drives the display screen 18. Depending on the settings of the navigation system 10, which may be adjusted by the user, the image generating unit 24 may drive the display screen 18 in a way to show the POI information, as specified by the control signal, in a list view 80, which is shown in Fig. 3a. From this screen output, the user can conveniently see that he needs one of the green, yellow and red badges to drive to restaurants 1 and 2, as these POIs are depicted in above described first visualization mode 84. In Fig. 3b, the same POI information is displayed. However, the image generating unit 24 generates a driver signal for the display screen 18 that results in the POIs being displayed on a map. For this purpose, the image generating unit overlays a map image as received from the map data processing unit with a POI image generated from the control signal of the processing unit 21. The POI position identifiers, denoted 1, 2, 3 and 4 in accordance with the respective restaurant numbers, are shown at the positions of the respective restaurants, with the identifiers 1 and 2 again being shown in a visualization mode comprising representations of the green, yellow and red badges.

Figs. 3c and 3d correspond to Figs. 3a and 3b, respectively, with the difference being that the restricted road area that comprises the restaurants 1 and 2 requires the vehicle to have a green badge. Accordingly, the restaurants 1 and 2 are shown in a third visualization mode 88 in the list view 80 comprising representations of the green badge only in Fig. 3a. In Fig. 3b, the restaurants 1 and 2 are also shown in a visualization mode that includes a representation of the badge only.

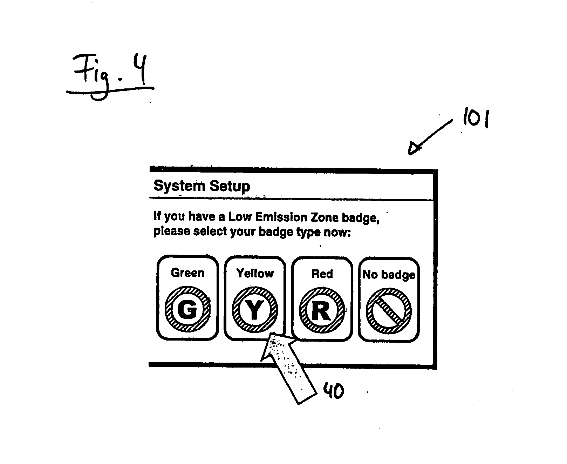

In Fig. 4, there is shown an exemplary implementation of a system setup for storing vehicle emission information in a navigation system. By means of the HMI 13, the processing unit 21 may receive user instructions for storing vehicle remission information. In the present case, the HMI 13 may display in a step 101 an input menu requesting the user to select from several input options. For example, the requested vehicle emission information may be the information 40 which type of emission badge is assigned to the vehicle. This information is then stored in the storing unit 22 accordingly and may be retrieved from the processing unit 21 upon request. For example, the driver of a vehicle is requested during a system setup (e.g., when operating the vehicle for the first time after purchase from the manufacturer) to input which type of emission badge (in the present example badge colour) is assigned to the vehicle. In the current example it is assumed that the user input via the HMI that the vehicle fulfills the emission standard of a yellow badge which is stored in the storing unit 22.

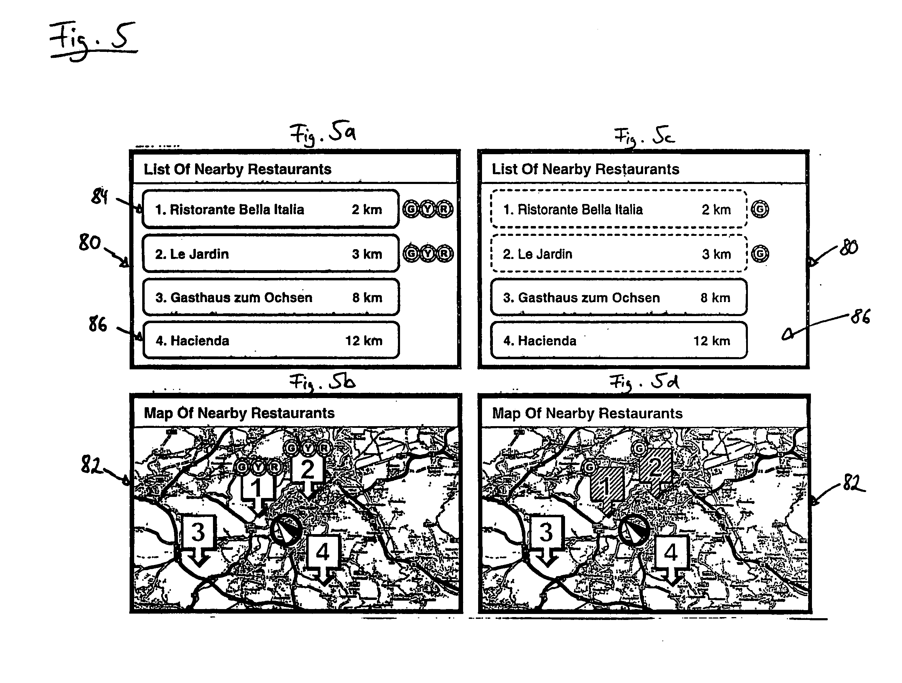

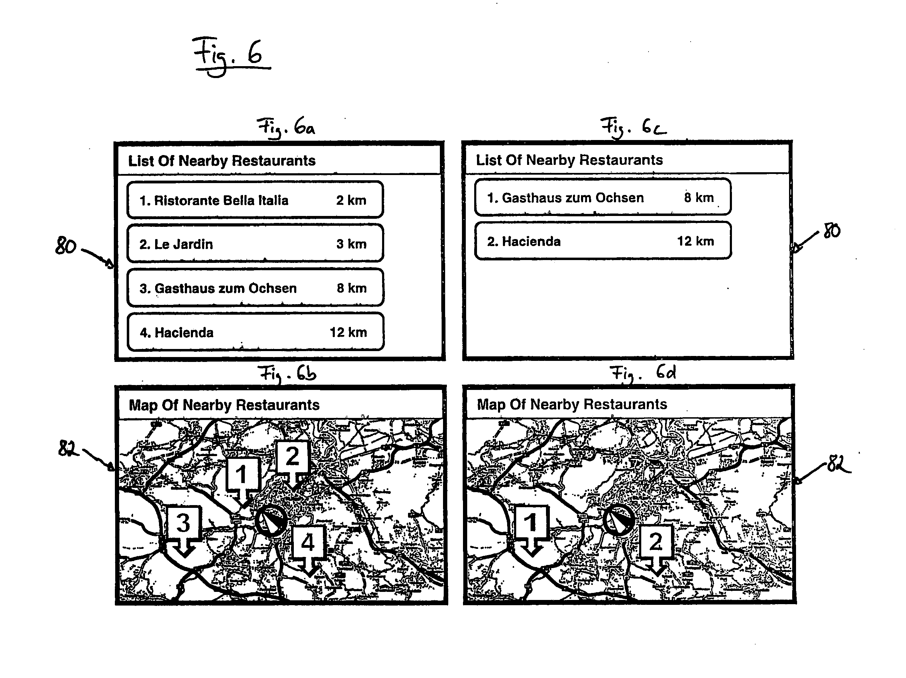

Reference is now made to the exemplary second and third embodiments, described with reference to Figs. 5 and 6. For these embodiments, it is assumed that vehicle emission information corresponding to the yellow badge is stored in the storing unit 22. Parts of the POI information provision performed be the processing unit 21 in the first exemplary embodiment is very similar to the POI information provision of the second embodiment such that a detailed description or the entire provision is omitted for brevity. Particularly, the operations of receiving POI information and access permission information and of determining if any and which one(s) of the POIs are within a restricted road area having which permission class is identical. However, before generating the control signal for causing an according output on the display screen 18, the permission classes determined for the restaurants 1, 2, 3 and 4 are compared to the vehicle emission information stored in storing unit 22. This comparison tests for each of the POIs, i.e. restaurants 1 through 4, if the emission class comprised in the vehicle emission information is sufficient for the respective permission classes of the road areas of the respective restaurants. With restaurants 1 and 2 being in a road area requiring at least a red badge and the vehicle having a yellow badge, restaurants 1 and 2 are determined to be allowable destinations. The same is true for restaurants 3 and 4, which are in an unrestricted road area. Accordingly, all four restaurants are displayed with a first visualization characteristic showing that they are allowable destinations. As the first visualization characteristic corresponds to the visualization characteristic used in the first embodiment, Figs. 5a and 5b are identical with Figs. 3a and 3b.

Figs. 5c and 5d show a situation corresponding to Figs. 3c and 3d, i.e. the restaurants 1 and 2 are located in a restricted road area requiring the vehicle to have a green badge. In the second embodiment, shown in Fig. 5, it is stored in the storing unit 22 that the vehicle, in which the navigation system is installed, has a yellow badge. The yellow badge is not sufficient to enter into a restricted road area requiring a green badge, which the processing unit 21 determines through a comparison of permission class and emission class for each POI. The processing unit 21 generates the control signal in such a way that the restaurants 1 and 2 are displayed with a second visualization characteristic. In the list view 80, the second visualization characteristic is a dashed frame around the restaurant name and the distance thereto. In the map view, the second visualization characteristic is a shaded POI symbol. Through these embodiments of the second visualization characteristic, the user is intuitively provided with the information which POIs are allowable destinations and which are not, based on the emission badge assigned to the vehicle. However, the user is still provided with the information about all POIs, which is convenient, should the user require this particular POI information or need to go to one of the restaurants 1 and 2 despite lacking the appropriate emission badge. Accordingly, the visualization mode for each of the POIs is a combination of the visualization characteristic and the badge information depicted. More generally, the visualization mode depends on the visualization characteristic and the access permission information.

The restaurants 1 and 2 may be displayed in a way that they are not selectable as destinations for the navigation system. For example, no input command may be accepted by the navigation system when touching a touch screen showing the output of Fig. 5c at the first and second list entries or when touching a touch screen showing the output of Fig. 5d at the positions of the first and second restaurants.

A third embodiment is shown in Fig. 6. The underlying situation, i.e. the POI information, the access permission information and the vehicle emission information received by the processing unit 21 is identical with the received information in the second embodiment, described in connection with Fig. 5. However, the processing unit 21 is adapted to cause a displaying of the POI information depending on the access permission information and the vehicle emission information that is different from the displaying of Fig. 5. The processing unit 21 of the third embodiment is adapted to compare the permission class of the road area of each POI with the emission class of the vehicle in order to determine if the vehicle has an emission badge sufficient to drive to the respective POI. The processing unit 21 makes a binary decision indicating if the given POI is an allowable destination or not. Based on these decisions, only allowable POIs are displayed on the display screen 18. Also, there is only one visualization mode, which is used for every POI displayed. In this way, less of the user's attention is drawn to the navigation system, since no LEZ information is presented. The user can grasp all information provided quickly and can pay much attention to driving, in case the navigation system is operated during driving. The user does not notice any of the processing of POI information, access permission information and vehicle emission information carried out in the processing unit 21, he is merely presented with a list view 80 or map view 82 of allowable POIs.

As all POIs are allowable in the scenarios of Figs. 6a and 6b, which correspond to the scenarios of Figs. 5a and 5b, the outputs of Figs. 6a and 6b are identical with the outputs of Figs. 5a and 5b, with the exception of no representation of required badges being present in Figs. 6a and 6b. In the scenario of restaurants 1 and 2 being non-allowable destination, depicted in Figs. 5c, 5d, 6c and 6d, the screen outputs of Figs. 6c and 6d deviate substantially from the screen outputs of Figs. 5c and 5d, since only the two restaurants being allowable destinations, renumbered to be restaurants 1 and 2 in Figs. 6c and 6d, are shown in Figs. 6c and 6d. Also, no representation of required badges is present in Figs. 6c and 6d. As only the allowable restaurants are shown, it becomes clear why the third embodiment is referred to as an embodiment filtering the POI information.

Reference is again made to Fig. 1, wherein the navigation system 10 comprises a receiving unit 16 for receiving a data signal 17, such as a wireless data signal. In this way, the navigation system 10 may be in contact with a remote data source, such as a central server. From this server, the receiving unit may receive POI information, access permission information and vehicle emission information. This information may be provided to the processing unit for causing displaying of POI information depending on the access permission information and the vehicle permission information to the user. In this way, POI information, access permission information and vehicle emission information does not have to be stored in the navigation system 10. Up-to-date information may be acquired from a remote source. However, in order to make the navigation system independent from the wireless communication link 17, POI information and access permission information may be stored in the source data storage unit, and vehicle emission information may be stored in the storing unit. This information may, however, be updated periodically or upon request from a remote source via the data link 17 or any suitable data connection.

While the invention has been described with reference to exemplary embodiments, it will be understood by those skilled in the art that various changes may be made and equivalence may be substituted for elements or features thereof without departing from the scope of the claims. Therefore, it is intended that the invention not be limited to the particular embodiments disclosed, but that the invention will include all embodiments falling within the scope of the appended claims.

## Claims

1. A navigation system (10) adapted to be installed in a vehicle and to provide point of interest (POI) information to a user, the navigation system (10) comprising:
• a processing unit (21) for receiving and processing POI information and access permission information, the access permission information being indicative of a required permission for a vehicle regarding the use of at least one specific road area depending on its emission characteristic, and
• a display screen (18) coupled to the processing unit (21),
• wherein the processing unit (21) is adapted to generate a control signal, **characterized in that**
• the control signal is adapted to result in a displaying of the POI information depending on the access permission information on the display screen (18).

2. The navigation system (10) of claim 1, wherein the POI information comprises a plurality of points of interest, with each point of interest being displayed on the display screen (18) in one of a plurality of visualization modes depending on the access permission information.

3. The navigation system (10) of claim 2, wherein the plurality of visualization modes correspond to a plurality of permission classes for vehicles depending on their emission characteristics.

4. The navigation system (10) of claim 2 or 3, wherein each of the plurality of visualization modes comprises a representation of at least one emission badge or emission class of a vehicle sufficient to enter a road area having the respective one of the plurality of permission classes, if any emission badge or emission class is required for the respective one of the plurality of permission classes.

5. The navigation system (10) of claim 4, wherein each of the plurality of visualization modes comprises a representation of all emission badges or emission classes of a vehicle sufficient to enter a road area having the respective one of the plurality of permission classes.

6. The navigation system (10) of one of claims 1 to 5, comprising:
a storing unit (22), coupled to the processing unit (21), for storing vehicle emission information which is indicative of an emission characteristic of the vehicle,
wherein the processing unit (21) is adapted to generate the control signal such that it results in a displaying of the POI information depending on the access permission information and the vehicle emission information on the display screen (18).

7. The navigation system (10) of claim 6, wherein the POI information comprises a plurality of points of interest and wherein the processing unit (21) is adapted to determine for each of the points of interest if it is an allowable destination based on the access permission information and the vehicle emission information.

8. The navigation system (10) of claim 7, wherein the processing unit (21) is adapted to generate the control signal in such a way that only points of interest being determined to be allowable destinations are displayed on the display screen (18).

9. The navigation system (10) of claim 7, wherein the processing unit (21) is adapted to generate the control signal in such a way that a first set of points of interest, each of which being determined to be an allowable destination, is displayed with a first visualization characteristic and a second set of points of interest, each of which being determined to be a non-allowable destination, is displayed with a second visualization characteristic.

10. The navigation system (10) of claim 9, wherein each point of interest is displayed on the display screen (18) in one of a plurality of visualization modes depending on the first and second visualization characteristics and the access permission information.

11. The navigation system (10) of any of claims 7 to 10, comprising:
a human-machine interface for selecting destinations for a navigation process, wherein the human-machine interface is adapted to disregard a selection attempt received from the user regarding a point of interest being determined to be a non-allowable destination.

12. The navigation system (10) of any of claims 1 to 11, wherein the processing unit (21) is adapted to generate the control signal in such a way that the POI information is displayed on the display screen (18) in a list view.

13. The navigation system (10) of any of claims 1 to 12, wherein the processing unit (21) is adapted to generate the control signal in such a way that the POI information is displayed on the display screen (18) on a map.

14. The navigation system (10) of any of claims 1 to 13, wherein the POI information, comprising a plurality of points of interest, and the access information received by the processing unit (21) are comprised of separate data sets, with the processing unit (21) being adapted to determine for each of the plurality of points of interest if it is located within the at least one specific road area.

15. A method of providing point of interest (POI) information to a user in a navigation system (10) which is adapted to be installed in a vehicle, the method comprising the following steps:
• receiving and processing POI information and access permission information, the access permission information being indicative of a required permission for a vehicle regarding the use of at least one specific road area depending on its emission characteristic, and
• generating a control signal and coupling the control signal to a display screen (18) of the navigation system,
**characterized in that**
• the control signal results in a displaying of the POI information depending on the access permission information.

## Patentansprüche

1. Navigationssystem (10), das angepasst ist, in einem Fahrzeug installiert zu werden und Information über interessante Punkte (POI), POI Information, an einen Benutzer bereitzustellen, wobei das Navigationssystem (10) aufweist:
- eine Verarbeitungseinheit (21) zum Empfangen und zur Verarbeitung von POI Information und von Zugangserlaubnisinformation, wobei die Zugangserlaubnisinformation bezeichnend für eine benötigte Erlaubnis eines Fahrzeugs betreffend die Benutzung von wenigstens einem spezifischen Straßenbereich abhängig von seiner Emissionscharakteristik ist, und
- einen Darstellungsschirm (18), der mit der Verarbeitungseinheit (21) gekoppelt ist,
- wobei die Verarbeitungseinheit (21) angepasst ist, ein Steuersignal zu generieren, **dadurch gekennzeichnet, dass**
- das Steuersignal angepasst ist, in eine Darstellung der POI Information abhängig von der Zugangserlaubnisinformation auf dem Darstellungsschirm (18) zu resultieren.

2. Navigationssystem (10) nach Anspruch 1, wobei die POI Information eine Mehrzahl von interessanten Punkten aufweist, wobei jeder interessante Punkt auf dem Darstellungsschirm (18) in einem von einer Mehrzahl von Visualisierungsmodi abhängig von der Zugangserlaubnisinformation dargestellt wird.

3. Navigationssystem (10) nach Anspruch 2, wobei die Mehrzahl von Visualisierungsmodi mit einer Mehrzahl von Berechtigungsklassen für Fahrzeuge abhängig von deren Emissionscharakteristik korrespondieren.

4. Navigationssystem (10) nach Anspruch 2 oder 3, wobei jeder der Mehrzahl von Visualisierungsmodi eine Repräsentation von wenigstens einer Emissionsplakette oder Emissionsklasse eines Fahrzeugs aufweist, die ausreicht, in einen Straßenbereich mit der jeweiligen der Mehrzahl von Berechtigungsklassen einzutreten, wenn eine Emissionsplakette oder Emissionsklasse für die jeweilige der Mehrzahl von Berechtigungsklassen notwendig ist.

5. Navigationssystem (10) nach Anspruch 4, wobei jeder der Mehrzahl von Visualisierungsmodi eine Repräsentation von allen Emissionsplaketten oder Emissionsklassen eines Fahrzeugs aufweist, die ausreichend sind, in einen Straßenbereich mit der jeweiligen der Mehrzahl von Berechtigungsklassen einzutreten.

6. Navigationssystem (10) nach einem der Ansprüche 1 bis 5, aufweisend:
eine Speichereinheit (22), die mit der Verarbeitungseinheit (21) gekoppelt ist, zur Speicherung von Fahrzeugemissionsinformation, welche für eine Emissionscharakteristik des Fahrzeugs bezeichnend ist, wobei die Verarbeitungseinheit (21) angepasst ist, das Steuersignal derart zu generieren, dass es in einer Darstellung der POI Information abhängig von der Zugangserlaubnisinformation und der Fahrzeugemissionsinformation auf dem Darstellungsschirm (18) resultiert.

7. Navigationssystem (10) nach Anspruch 6, wobei die POI Information eine Mehrzahl von interessanten Punkten aufweist und wobei die Verarbeitungseinheit (21) angepasst ist, für jeden der interessanten Punkte zu bestimmen, ob er ein zulässiges Ziel basierend auf der Zugangserlaubnisinformation und der Fahrzeugemissionsinformation ist.

8. Navigationssystem (10) nach Anspruch 7, wobei die Verarbeitungseinheit (21) angepasst ist, das Steuersignal in einer Weise zu generieren, dass nur interessante Punkte auf dem Darstellungsschirm (18) dargestellt werden, die als erlaubte Ziele bestimmt wurden.

9. Navigationssystem (10) nach Anspruch 7, wobei die Verarbeitungseinheit (21) angepasst ist, das Steuersignal in einer Weise zu generieren, dass ein erster Satz von interessanten Punkten, von denen jeder als ein zulässiges Ziel bestimmt wurde, mit einer ersten Visualisierungscharakteristik dargestellt wird und ein zweiter Satz von interessanten Punkten, von denen jeder als ein nicht zulässiges Ziel bestimmt wurde, mit einer zweiten Visualiserungscharakteristik dargestellt wird.

10. Navigationssystem (10) nach Anspruch 9, wobei jeder interessante Punkt auf dem Darstellungsschirm (18) in einem aus einer Mehrzahl von Visualisierungsmodi abhängig von der ersten und zweiten Visualisierungscharakteristik und der Zugangserlaubnisinformation dargestellt wird.

11. Navigationssystem (10) nach einem der Ansprüche 7 bis 10, aufweisend:
eine Mensch-Maschine-Schnittstelle zur Auswahl von Zielen für einen Navigationsprozess, wobei die Mensch-Maschine-Schnittstelle angepasst ist, einen Auswahlversuch nicht zu beachten, der von einem Benutzer betreffend einen interessanten Punkt empfangen wurde, der als ein nicht erlaubtes Ziel bestimmt wurde.

12. Navigationssystem (10) nach einem der Ansprüche 1 bis 11, wobei die Verarbeitungseinheit (21) angepasst ist, das Steuersignal in einer Weise zu erzeugen, dass die POI Information auf dem Darstellungsschirm (18) in einer Listendarstellung dargestellt wird.

13. Navigationssystem (10) nach einem der Ansprüche 1 bis 12, wobei die Verarbeitungseinheit (21) angepasst ist, das Steuersignal in einer Weise zu erzeugen, dass die POI Information auf dem Darstellungsschirm (18) auf einer Karte dargestellt wird.

14. Navigationssystem (10) nach einem der Ansprüche 1 bis 13, wobei die POI Information, die eine Mehrzahl von interessanten Punkten aufweist, und die von der Verarbeitungseinheit (21) empfangene Zugriffsinformation separate Datensätze aufweisen, wobei die Verarbeitungseinheit (21) angepasst ist, für jeden der Mehrzahl von interessanten Punkten zu bestimmen, ob er innerhalb des wenigstens einen spezifischen Straßenbereichs angeordnet ist.

15. Verfahren zur Bereitstellung von Information über interessante Punkte (POI), POI Information, an einen Benutzer in einem Navigationssystem (10), welches angepasst ist, in einem Fahrzeug installiert zu werden, wobei das Verfahren die folgenden Schritte aufweist:
- Empfangen und Verarbeiten von POI Information und Zugangsberechtigungsinformation, wobei die Zugangsberechtigungsinformation über eine erforderliche Berechtigung für ein Fahrzeug betreffend die Benutzung von wenigstens einem spezifischen Straßenbereich abhängig von seiner Emissionscharakteristik bezeichnend ist und
- Erzeugung eines Steuersignals und Kopplung des Steuersignals an einen Darstellungsschirm (18) des Navigationssystems, **dadurch gekennzeichnet, dass**
- das Steuersignal in einer Darstellung der POI Information abhängig von der Zugangsberechtigungsinformation resultiert.

## Revendications

1. Système de navigation (10) adapté pour être installé dans un véhicule et pour fournir des informations de point d'intérêt (POI) à un utilisateur, le système de navigation (10) comprenant :
• une unité de traitement (21) pour recevoir et traiter des informations de POI et des informations de permission d'accès, les informations de permission d'accès informant sur une permission requise pour un véhicule concernant l'utilisation d'au moins une zone routière spécifique en fonction de ses caractéristiques d'émission, et
• un écran d'affichage (18) couplé à l'unité de traitement (21),
• dans lequel l'unité de traitement (21) est adaptée pour générer un signal de commande, **caractérisé en ce que**
• le signal de commande est adapté pour provoquer l'affichage des informations de POI en fonction des informations de permission d'accès sur l'écran d'affichage (18).

2. Système de navigation (10) selon la revendication 1, dans lequel les informations de POI comprennent une pluralité de points d'intérêt, chaque point d'intérêt étant affiché sur l'écran d'affichage (18) dans un mode de visualisation parmi une pluralité de modes de visualisation en fonction des informations de permission d'accès.

3. Système de navigation (10) selon la revendication 2, dans lequel les modes de visualisation correspondent à une pluralité de classes de permission pour véhicules en fonction de leurs caractéristiques d'émission.

4. Système de navigation (10) selon la revendication 2 ou 3, dans lequel chacun des modes de visualisation comprend une représentation d'au moins un passe d'émission ou classe d'émission d'un véhicule suffisant(e) pour entrer dans une zone routière ayant la classe respective parmi la pluralité de classes de permission, si un passe d'émission ou une classe d'émission est requis pour la classe de permission respective.

5. Système de navigation (10) selon la revendication 4, dans lequel chacun des modes de visualisation comprend une représentation de tous les passes d'émission ou de toutes les classes d'émission d'un véhicule suffisant(e)s pour entrer dans une zone routière ayant la classe de permission respective.

6. Système de navigation (10) selon l'une des revendications 1 à 5, comprenant :
une unité de stockage (22), couplée à l'unité de traitement (21), pour stocker une information d'émission de véhicule qui donne une caractéristique d'émission du véhicule,
dans lequel l'unité de traitement (21) est adaptée pour générer le signal de commande de telle manière qu'il provoque l'affichage des informations de POI en fonction des informations de permission d'accès et de l'information d'émission de véhicule sur l'écran d'affichage (18).

7. Système de navigation (10) selon la revendication 6, dans lequel les informations de POI comprennent une pluralité de points d'intérêt et dans lequel l'unité de traitement (21) est adaptée pour déterminer pour chacun des points d'intérêt s'il s'agit d'une destination pouvant être autorisée d'après les informations de permission d'accès et l'information d'émission de véhicule.

8. Système de navigation (10) selon la revendication 7, dans lequel l'unité de traitement (21) est adaptée pour générer le signal de commande de telle manière que seuls les points d'intérêt qui sont déterminés comme étant des destinations pouvant être autorisées sont affichés sur l'écran d'affichage (18).

9. Système de navigation (10) selon la revendication 7, dans lequel l'unité de traitement (21) est adaptée pour générer le signal de commande de telle manière qu'un premier ensemble de points d'intérêt, qui sont tous déterminés comme étant des destinations pouvant être autorisées, est affiché avec une première caractéristique de visualisation et un deuxième ensemble de points d'intérêt, qui sont tous déterminés comme étant des destinations ne pouvant pas être autorisées, est affiché avec une deuxième caractéristique de visualisation.

10. Système de navigation (10) selon la revendication 9, dans lequel chaque point d'intérêt est affiché sur l'écran d'affichage (18) dans un mode de visualisation parmi une pluralité de modes de visualisation en fonction des première et deuxième caractéristiques de visualisation et des informations de permission d'accès.

11. Système de navigation (10) selon l'une quelconque des revendications 7 à 10, comprenant :
une interface homme-machine pour sélectionner des destinations pour un processus de navigation, dans lequel l'interface homme-machine est adaptée pour rejeter une tentative de sélection provenant de l'utilisateur concernant un point d'intérêt déterminé comme étant une destination ne pouvant pas être autorisée.

12. Système de navigation (10) selon l'une quelconque des revendications 1 à 11, dans lequel l'unité de traitement (21) est adaptée pour générer le signal de commande de telle manière que les informations de POI sont affichées sur l'écran d'affichage (18) sous forme de liste.

13. Système de navigation (10) selon l'une quelconque des revendications 1 à 12, dans lequel l'unité de traitement (21) est adaptée pour générer le signal de commande de telle manière que les informations de POI sont affichées sur l'écran d'affichage (18) sur une carte.

14. Système de navigation (10) selon l'une quelconque des revendications 1 à 13, dans lequel les informations de POI, comprenant une pluralité de points d'intérêt, et les informations d'accès reçues par l'unité de traitement (21) sont constituées d'ensembles de données distincts, l'unité de traitement (21) étant adaptée pour déterminer pour chacun des points d'intérêt s'il se situe à l'intérieur de ladite au moins une zone routière spécifique.

15. Procédé de fourniture d'informations de point d'intérêt (POI) à un utilisateur dans un système de navigation (10) qui est adapté pour être installé dans un véhicule, le procédé comprenant les étapes suivantes :
• recevoir et traiter des informations de POI et des informations de permission d'accès, les informations de permission d'accès informant sur une permission requise pour un véhicule concernant l'utilisation d'au moins une zone routière spécifique en fonction de ses caractéristiques d'émission, et
• générer un signal de commande et coupler le signal de commande à un écran d'affichage (18) du système de navigation, **caractérisé en ce que**
• le signal de commande provoque l'affichage des informations de POI en fonction des informations de permission d'accès.
